(19)
Europäisches Patentamt

European Patent Office

Office européen des brevets

(11) **EP 4 765 279 A1**

(12) **EUROPEAN PATENT APPLICATION**

(43) Date of publication:
**24.06.2026 Bulletin 2026/26**

(21) Application number: **24222654.6**

(22) Date of filing: **20.12.2024**

(51) International Patent Classification (IPC):
$H01M\ 10/052^{(2010.01)}$ $\quad H01M\ 10/056^{(2010.01)}$
$H01M\ 10/0565^{(2010.01)}$ $\quad H01M\ 6/18^{(2006.01)}$
$H01M\ 4/38^{(2006.01)}$ $\quad H01M\ 4/40^{(2006.01)}$
$H01M\ 4/583^{(2010.01)}$ $\quad H01M\ 4/62^{(2006.01)}$
$H01M\ 10/44^{(2006.01)}$ $\quad H01M\ 50/202^{(2021.01)}$
$H01M\ 4/133^{(2010.01)}$ $\quad H01M\ 10/04^{(2006.01)}$
$H01M\ 10/0587^{(2010.01)}$ $\quad H02J\ 7/00^{(2026.01)}$
$E21B\ 41/00^{(2006.01)}$

(52) Cooperative Patent Classification (CPC):
H01M 4/382; H01M 4/133; H01M 4/405;
H01M 4/5835; H01M 4/623; H01M 6/181;
H01M 6/185; H01M 10/052; H01M 10/0565;
H01M 10/0587; H01M 10/44; H02J 7/855;
H02J 2207/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Metrol Technology Limited Aberdeen, Aberdeenshire AB21 0GU (GB)**

(72) Inventors:
• **Moloney, James Daniel**
  **Aberdeen, AB21 0GU (GB)**

• **Hudson, Steven Martin**
  **Aberdeen, AB21 0GU (GB)**
• **Tomov, Rumen**
  **Cambridge, CB3 0FS (GB)**
• **Kumar, Ramachandran Vasant**
  **Cambridge, CB3 0FS (GB)**
• **Librizzi, Paulina**
  **Aberdeen, AB21 0GU (GB)**
• **Jarvis, Leslie David**
  **Aberdeen, AB21 0GU (GB)**

(74) Representative: **Watson, Craig Simon Cranach Patent Attorneys Capitol Building 431 Union Street Aberdeen AB11 6DA (GB)**

(54) **ELECTROCHEMICAL CELL WITH A POLYMER-IN-SALT ELECTROLYTE, A SYSTEM COMPRISING THE CELL AND A METHOD OF USING AN ASSOCIATED CATHODE**

(57)    An electrochemical cell having a cathode comprising a fluorinated carbon nanotube (F-CNT), an anode and a solid electrolyte; wherein the solid electrolyte comprises an electrolyte component comprising 50 to 95 wt.% of an alkali metal-containing electrolyte salt, and 5 to 50 wt.% of a polymer. Embodiments do not require a carbon-based conductive-adjuvant in the cathode. The thickness of the solid electrolyte may be least 5 microns. A container comprising the cell may have space to allow for thermal expansion thereof. They may be used at elevated temperatures greater than 65 °C or more, such as in a subterranean well.

FIG. 3

EP 4 765 279 A1

**Description**

**Field of the invention**

The present invention concerns the field of alkali metal electrochemical cells and batteries, and in particular solid-state cells and batteries. In particular, the invention relates to cathodes for use with solid polymer-based electrolytes in lithium cells. Aspects of the invention relate to an electrochemical cell comprising solid electrolytes for lithium cells, and the use of such cells at elevated temperatures.

**Background of the invention**

Lithium cells are considered a mature technology. However, current liquid electrolytes for lithium metal batteries are associated with risks such as electrolyte leakage, internal shorting, electrode corrosion, and the production of hazardous by-products; and have a restricted voltage window. The use of solid electrolytes represents one potential solution to the problem of electrolyte leakage and can limit self-discharge within the batteries that shortens the life of a cell. A promising class of solid electrolytes is composite electrolytes, which combine a polymeric electrolyte with an inorganic filler and ionic salt. By "solid" we exclude electrolytes which have liquid or gel components at room temperature and pressure.

Two classes of inorganic fillers have been investigated as additives for use in polymer-based electrolytes: passive fillers and active fillers. Passive fillers do not directly participate in the conduction of ions and include metal oxides such as $Al_2O_3$, $SiO_2$, $TiO_2$, $ZrO_2$, and $BaTiOs$. While passive fillers do not participate directly in the conduction of ions, they do assist in the stability of the conductive amorphous polymer phase by hindering recrystallization of the polymer which can reduce ion conductivity in the polymer matrix. They may under certain circumstances provide interfacial paths for additional ionic conduction.

By contrast, active fillers can directly participate in the conduction of ions through the material and also at the interfaces, while also providing mechanical stability to the amorphous polymer phase. Such active fillers may be referred to as active stabilizers herein. Examples of these active fillers include $Li_{1.3}Al_{0.3}Ti_{1.7}(PO_4)_3$ (LATP), $Li_3N$, $Li_7La_3Zr_2O_{12}$ (LLZO), $Li_{0.33}La_{0.557}TiO_3$ (LLTO), and $Li_{1.4}Al_{0.4}Ge_{1.6}(PO_4)_3$ (LAGP), amongst other active fillers.

One of the more promising solid electrolytes is a solid polymer composite electrolyte made from poly(ethylene oxide) (PEO) and LLZO. LLZO used singly by itself as the Solid-State Electrolyte (SSE) can be difficult to process and incorporate in the established cell making and is a brittle material. In a cell this can cause structural failure which risks shorting contact between the cathode and anode, while providing poor contact between the cell electrode and electrolyte. Choi et al (J. Power Sources, Vol. 274, 15 January 2015, pp 458-463) first combined these two materials in a composite electrolyte with tetragonal LLZO as the electrolyte filler and PEO as the matrix and found a maximum conductivity at room temperature of 10-5 S cm-1.

In 1993 Angell et all (NATURE vol. 362 (1993) pp.137-139) introduced new composite ionic conductor, namely "polymer-in-salt" materials, in which the amount of Li lithium salts exceeds the quantitiy of the polymer thus forming "rubbery electrolyte". These materials preserved good lithium-ion conductivities and high electrochemical stability due to lower glass transitions allowing then to remain rubbery at room temperature. The ionic conductivity in the "polymer-in-salt" materials was shown to be dominated by the Li+ cations and to express transport number close to 0.99.

Patent application CN111009686 discloses an all-solid electrolyte containing a high concentration of lithium salt (LiTFSI) dispersed in a polyvinylidene fluoride-hexafluoropropylene polymer matrix, wherein the content of the lithium salt in the electrolyte is greater than 50 wt.%. Such compositions in which the wt.% of the salt is greater than the wt.% of polymer are known as 'polymer-in-salt' solid electrolytes. Despite various advances, solid-state electrochemical cells typically have poorer conductivity and capacity when compared with more established liquid-state technologies. While the solid electrolytes discussed above go some way to addressing these drawbacks, there remains a need to further improve the electrochemical properties of electrochemical cells that incorporate these solid electrolytes.

The present invention seeks to provide polymer-based solid electrolytes which provide improved metal ion conductivity. It is also an object of the present invention to provide electrochemical cells comprising the solid electrolytes which can be discharged to around 90% or more of their theoretical capacity which for CFx is 865 mAh $g^{-1}$, where x=1. The invention also seeks to provide solid electrolytes which are thermally stable, i.e. can operate at relatively high temperatures, i.e. from 50 °C to 175 °C, preferably 75 to 130 °C, without significant degradation, that is, more than 10% increase in on-load source resistance with respect to liquid-state electrolyte, or more than 30% delivered capacity over a period more than 8 years at 130 °C.

The present invention also seeks to provide an electrode that is particularly suitable for use with the polymer-based solid electrolytes described herein, and thus provide an improved electrochemical cell incorporating polymer-based solid electrolytes. One or more of these objectives may be satisfied by cathode and electrolyte compositions, and electrochemical cells, as hereinafter described.

## Summary of the Invention

In accordance with a first aspect of the present invention, there is provided a method of using a cathode for a cell comprising a fluorinated carbon nanotube (F-CNT) at temperatures greater than about 65 °C, preferably greater than about 100 °C, optionally greater than about 120 °C.

Said cathode may be used in a variety of wells including oil and gas wells in general, steam/water injection wells, gas injection wells, geothermal thermal wells, carbon capture and storage (CCS) wells, hydrogen storage wells. In particular, the cathode may be used in geothermal wells or production wells for oil or gas production.

The temperature of use described herein is the environmental temperature and does not take into account any temperature increases caused by operation of the cell. For example, it may be the surrounding temperature immediately before the cell starts to operate.

In accordance with a second aspect of the present invention there is provided an electrochemical cell comprising:

    a. a cathode;
    b. an anode; and
    c. a solid electrolyte;

        wherein the cathode is an electrode comprising a fluorinated carbon material, and
        wherein the solid electrolyte comprises an electrolyte component and optionally a filler, the electrolyte component comprising:

            i. 50 to 95 wt.% of an alkali metal-containing electrolyte salt, and
            ii. 5 to 50 wt.% of a polymer.

Thus the cell may include the cathode of the first aspect of the invention. Preferred and optional features herein of the cathode and cell independently apply to each of the first and second aspects of the invention and are not reiterated for brevity.

The electrochemical cell may be a solid-state electrochemical cell.

The cell may be provided in a pressure-sealed cylindrical container. It may be 12 - 35 mm in diameter and may be 50 - 200 mm long. It is typically hermetically sealed. The container is usually metal such as stainless steel. A plurality of cells in the form of layers may be stacked together to form a battery. The battery may have a circular cross-section.

The cells may be shaped into a bobbin shape or a spiral wound shape.

The cell is preferably pliable to be shaped or rolled into a particular shape, such as said bobbin or spiral wound shapes. Therefore, the cell preferably has a Young's Modulus in the range of 0.5 to 500MPa at standard temperature and pressure, preferably measured using a Universal Testing Machine (universal tester) in accordance with ASTM E111 -17.

Whilst a single salt is viable in the electrolyte, it may be advantageous to have more than one salt in a mix to make the electrolyte rubbery. For example, using LiTFSI and LiClO$_4$ salts.

The anode may be connected to the container. The cathode may connect with an electrically insulated penetrator. The electrical insulation may include an elastomer 'o' ring, moulded plastic (e.g. peek) sleeve. Preferably it includes a glass to metal seal. The cell container may define a space adjacent the cell to allow for thermal expansion thereof. It may be, for example, a void (vacuum), an inert gas such as argon, or an inert compressible material such as open cell PTFE foam.

The fluorinated carbon material is a preferably a fluorinated carbon nanotube (F-CNT). Thus, the cathode preferably comprises a fluorinated carbon nanotube (F-CNT). It has surprisingly been found that the use of F-CNT as a cathode material in the electrochemical cell of the invention has certain advantages when compared to the use of other cathode materials, such as fluorinated graphite or fluorinated graphene (CFx).

Without wishing to be bound by theory, it is thought that the fluorinated carbon nanotube (F-CNT) is a source of fluorine which reacts with the alkali metal, such as lithium, to form an alkali fluoride (such as lithium fluoride (LiF)). This reaction is the source of energy in the electrochemical cell.

The solid electrolyte may further comprise 0.1 to 25 wt.% an inorganic active stabilizer, as filler, comprising an alkali metal compound. In some embodiments, the inorganic active stabilizer comprises Li$_7$La$_3$Zr$_2$O$_{12}$ (LLZO), or a doped variation thereof.

The cation of the inorganic active stabilizer may be the same cation of the alkali metal-containing electrolyte salt, such as lithium.

The cathode may be an electrode comprising:

    I) 10-98 wt.% a fluorinated carbon material (e.g. fluorinated carbon nanotubes (F-CNTs));
    ii) 1-45 wt.% an alkali metal-containing salt; and
    iii) 1-45 wt.% an organic polymer or copolymer.

More specifically, the cathode may be an electrode comprising:

I) 50-98 wt.%, a fluorinated carbon material (e.g. fluorinated carbon nanotubes (F-CNTs));
ii) 1-35 wt.%, an alkali metal-containing salt; and
iii) 1-35 wt.% an organic polymer or copolymer.

Optionally the electrode may further comprise:
iv) 0.1-15 wt.% of a carbon-based conductive adjuvant, such as carbon-black or a graphite-based carbon. Where present, such a carbon-based-conductive adjuvant may typically be present in an amount of up to 15 wt.%, optionally up to 10 wt.%.
A further aspect of the invention is the use of the electrochemical cell as hereinbefore defined at a temperature of greater than about 65 °C, preferably greater than about 100 °C. In certain aspects, the electrochemical cell of the invention may be used for powering a tool in a subterranean well, preferably in a subterranean well for oil and/or gas.

## Detailed Description of the Invention

Throughout, "conductive" refers to ionic or electronic conduction or both.
The term "solid-state" electrolyte as used herein has its normal meaning in the art, and refers to a system or device in which ionic transport occurs in a solid phase.
The term "solid composite electrolyte" as used herein refers to an electrolyte composition which is solid at ambient temperature and pressure. For the avoidance of doubt, this does not exclude the possibility that when used at elevated temperatures (i.e. temperatures above ambient temperature), the electrolyte composition may become amorphous, semi-solid, gel-like, partially liquid, or wholly liquid.
The second aspect of the present invention is an electrochemical cell comprising:

a. a cathode;
b. an anode; and
c. a solid electrolyte;

wherein the cathode is an electrode comprising a fluorinated carbon material, and
wherein the solid electrolyte comprises:

1. 50 to 95 wt.% of an alkali metal-containing electrolyte salt, and
2. 5 to 50 wt.% of a polymer.

The fluorinated carbon material is a preferably a fluorinated carbon nanotube (F-CNT).
The fluorinated carbon material may further comprise one or more additional fluorinated carbon materials, such as those derived from a carbon material selected from the group consisting of activated carbon, coke, pitch coke, charcoal, synthetic or natural carbon fibre, carbon black, graphene, hard carbon, graphite, and composites (carbonizates) or mixtures thereof.
The alkali metal-containing salt is typically a lithium salt, but other alkali metals such as sodium may be used. The electrolyte salt may comprise one or more of: $LiClO_4$, $LiBF_4$, $LiPF_6$, $LiAsF_6$, $LiCF_3SO_3$, $LiN(CF_3SO_2)_2$, $NaCF_3SO_3$, LiDFOB, LiBOB, a lithium "imide" salt. The lithium imide salt may comprise: Lithium bis(trifluoromethanesulfonyl)imide (LiTFSI) or lithium bis(fluorosulfonyl)imide (LiFSI). A preferred alkali metal-containing electrolyte salt is LiFSI or LiTFSI, more preferably LiTFSI.
The solid electrolyte may be a solid composite electrolyte as hereinbefore defined. The solid electrolyte as described herein may preferably comprise:

a. 45 to 90 wt.% of an alkali metal-containing electrolyte salt,
b. 5 to 50 wt.% of a polymer, and
c. 0.1 to 25 wt.% of an active or passive inorganic stabilizer comprising an alkali metal compound.

The wt.% detailed for the electrolyte above are determined based on the total mass of the electrolyte. References here to the electrolyte include all components a, b and c whilst references to the polymer include only component b.
In some preferred embodiments of the invention, the solid electrolyte as described herein comprises:

a. 60 to 90 wt.% of an alkali metal-containing electrolyte salt, salt
b. 5 to 35 wt.% of a polymer, and
c. 0.1 to 5 wt.% of an active or passive inorganic stabiliser comprising an alkali metal compound.

The polymer is preferably on organic polymer or copolymer. Suitable organic polymers or copolymers include: poly(ethylene oxide), polypropylene oxide), poly(dimethylsiloxane), poly(acrylonitrile), poly(methyl methacrylate), poly(vinyl chloride), poly(vinyl acetate), poly(vinylidene fluoride), poly(vinylidene fluoride-hexafluoropropylene), poly [bis(methyoxy-ethoxy-ethoxy) phosphazene, poly(carbonate), polyphenylene ether), poly(vinylidene fluoride), or blends thereof. As used herein, the term "EO" refers to ethylene oxide groups (monomers) that may be present in the electrolyte. An example of a electrolyte that contains ethylene oxide groups is poly(ethylene oxide) (PEO).

The organic polymer may comprise a copolymer of two or more monomers. For example the co-polymers may comprise PEO-PAN, PEO-PMMA, PEO-PVDF, PMMA-PVDF, PMMA-PAN, PAN-PVDF, or blends thereof.

For particular embodiments, the organic polymer or copolymer may comprise polyethylene oxide) or poly(vinylidene fluoride). Preferably, the organic polymer or copolymer may comprise poly(ethylene oxide).

The polymer for use in the solid electrolyte must be an electronic insulator (i.e. does not permit electronic conduction; has an electronic conductivity of less than about $10^{-10}$ ohm$^{-1}$ m$^{-1}$, e.g. between about $10^{-20}$ to $10^{-10}$ ohm$^{-1}$ m$^{-1}$) but which does permit ion transport. It must have a high room temperature dielectric constant, such as above 3, preferably greater than 10. Without wishing to be bound by theory, this is understood to allow the polymer to solvate the alkali-metal containing electrolyte salt, typically by forming Van der Waals bonds between salt and polymer.

Suitable polymers for use in the solid electrolyte are those that solvate alkali salts, especially lithium salts, in order to conduct alkali ions, especially lithium ions, and such that they are poor electronic conductors. These polymers include: polyethylene oxide), polypropylene oxide), poly(dimethylsiloxane), poly(acrylonitrile), poly(methyl methacrylate), poly(vinyl chloride), poly(vinyl acetate), poly(vinylidene fluoride), poly(vinylidene fluoride-hexafluoropropylene), poly [bis(methyoxy-ethoxy-ethoxy) phosphazene, poly(carbonate), polyphenylene ether), poly(vinylidene fluoride), or blends thereof.

The polymer may comprise a copolymer of two or more monomers. For example the co-polymers may comprise PEO-PAN, PEO-PMMA, PEO-PVDF, PMMA-PVDF, PMMA-PAN, PAN-PVDF, or blends thereof. In preferred electrolyte compositions the polymer is selected from: poly(vinylidene fluoride-hexafluoropropylene) copolymer, polyethylene oxide) or poly(vinylidene fluoride) and blends thereof.

For particular embodiments, the organic polymer or copolymer may comprise poly(ethylene oxide) or poly(vinylidene fluoride). Preferably, the organic polymer or copolymer may comprise poly(ethylene oxide).

For the avoidance of doubt, in the context of the present application, the term "polyethylene oxide)" and its abbreviated form "PEO", also encompasses short-chained PEO, which may be referred to in the art as "poly(ethylene glycol)" or "PEG".

The polymer may have an average molecular weight (Mw) of at least 10,000 grams per mole, optionally at least 100,000. The average molecular weight (Mw) may be at most 10,000,000 optionally at most 5,000,000 more optionally at most 1,500,000. The polymer for use in the solid composite electrolyte may be substantially amorphous.re When reference to molecular weight of a polymer or average molecular weight of a polymer is made, this is understood to be the number average molecular weight. That is the total mass of all molecules of the polymer divided by the number of molecules.

The alkali metal-containing electrolyte salt may be an inorganic or organic electrolyte salt.

The alkali metal-containing electrolyte salt is typically a lithium electrolyte salt, but other alkali metals such as sodium may be used. For a lithium based cell, the electrolyte salt may comprise one or more of: $LiClO_4$, $LiBF_4$, $LiPF_6$, $LiAsF_6$, $LiCF_3SO_3$, $LiN(CF_3SO_2)_2$, $NaCF_3SO_3$, LiDFOB, LiBOB, a lithium "imide" salt. The lithium imide salt may comprise: Lithium bis(trifluoromethanesulfonyl)imide (LiTFSI) or lithium bis(fluorosulfonyl)imide (LiFSI). Preferred alkali metal-containing electrolyte salts are $LiClO_4$ or LiTFSI. A particularly preferred alkali metal-containing electrolyte salt is LiTFSI.

The inorganic active stabilizer stabilises the electrolyte mechanically. It may be considered as an active, rather than passive filler.

The inorganic active stabilizer typically comprises the same metal ions as that of the alkali metal-containing electrolyte salt ion. Without wishing to be bound by theory, in such cases the inorganic active stabilizer and the electrolyte salt having the same metallic ion may be beneficial for reinforcing ionic conductivity of the said metallic ion. The inorganic active stabilizer is typically an alkali metal-based ceramic material, preferably lithium-based, which can therefore provide lithium ions which can take part in conduction.

Examples of suitable inorganic active stabilizers for use in the present invention include one or more of: $Li_{1.3}Al_{0.3}Ti_{1.7}(PO_4)_3$ (LATP), $Li_3N$, $Li_7La_3Zr_2O_{12}$ (LLZO), $Li_{0.33}La_{0.557}TiO_3$ (LLTO), LLZTO, LLAZO, and $Li_{1.4}Al_{0.4}Ge_{1.6}(PO_4)_3$ (LAGP), a alkali metal garnet, $LiAlO_2$, $Li_{10}GeP_2S_{12}$ (LGPS), lithium ion-conducting glass-ceramic (LICGC), $Li_2PO_2N$ (LiPON), $Li_{0.5}La_{0.5}TiO_3$, $Li_{1.4}Al_{0.4}Ti_{1.6}(PO4)_3$, $Li1.5Al_{0.5}Ge_{1.5}(PO_4)_3$ and $Na_3Zr_2Si_2PO_{12}$, and doped versions thereof.

The preferred inorganic active stabilizer comprises, or consists of, LLZO preferably doped with for example gallium, strontium, titanium, and/or aluminium. Without wishing to be bound by theory, it is considered that such a dopant helps stabilise the cubic phase which conducts.

In some preferred embodiments of the invention, the LLZO may be nanoparticles of LLZO. That is, in the context of the present disclosure, "nanoparticles" refers to particles with a particle size distribution of d50, optionally d70, optionally d90, optionally d95 of less than 1 micrometre. This may be measured by laser diffraction following ISO 13320:2020. Without wishing to be bound by theory, it is thought that using nanoparticles of LLZO permits greater dispersion of the LLZO within the solid electrolyte without compromising the mechanical stability of the solid electrolyte. The inorganic active stabilizer may be present in the solid electrolyte in an amount of 0.1 to 25 wt.%, more preferably 0.5 to 10 wt.%, still more preferably 1.0 to 2.0 wt.%, e.g. about 1.0 wt.%, about 1.1 wt.%, about 1.2 wt.%, about 1.3 wt.%, about 1.4 wt.%, about 1.5 wt.%, about 1.6 wt.%, about 1.7 wt.%, about 1.8 wt.%, about 1.9 wt.%, or about 2.0 wt.%

The conductivity of the finished electrolyte at 60 °C is preferably in the range of between $10^{-4}$ and $10^{-1}$ S cm$^{-1}$, such as about $5.8 \times 10^{-3}$ S cm$^{-1}$.

The conductivity of the finished electrolyte at at 90 °C is preferably in the range of between $10^{-4}$ and $10^{-1}$ S cm$^{-1}$, such as about $1.1 \times 10^{-2}$ S cm$^{-1}$.

The conductivity of the finished electrolyte at 120 °C is preferably in the range of between $10^{-4}$ and $10^{-1}$ S cm$^{-1}$, such as about $7.7 \times 10^{-3}$ S cm$^{-1}$.

Alternatively, the conductivity of the finished electrolyte is preferably in the range of between $10^{-4}$ and $10^{-1}$ S cm$^{-1}$ at 60 °C - 150 °C, such as about $1.1 \times 10^{-2}$ S cm$^{-1}$ at 90 °C.

Without wishing to be bound by theory, it is thought that the inorganic active stabilizer comprising an alkali metal compound stabilizes the electrolyte and provides alkali metal ions which promote conduction thereof through the electrolyte. The inorganic active stabilizer is understood to stabilise the polymer so as to prevent or limit crystallisation, which can adversely affect the ion conductivity of the polymer. The inorganic active stabilizer is also understood to modify the electrolyte by improving ion conductivity. The inorganic active stabilizer preferably has an ability to form Van der Waals bonds with the electrolyte polymer.

The salt may dissolve in the polymer such that the ceramic inorganic active stabilizer may be interspersed in the polymer/salt solid solution. This may be achieved by any suitable method, such as by mixing fine stabilizer and salt particles and dispersing these in the polymer, for example by liquid casting with a solvent that can be evaporated away or by other high-shear force mixing methods. For the avoidance of doubt, other suitable methods may be used to obtain a suitable interspersed mixture of the electrolyte, electrolyte salt and active stabilizer. One preferred method of interspersing the polymer, electrolyte salt and inorganic active stabilizer is by sonication of a mixture of at least two of these components. A further method uses a vacuum centrifugal mixer.

Optionally, the electrode for a solid-state electrochemical cell, may comprise:

i) 70-98 wt.% a fluorinated carbon material comprising fluorinated carbon nanotubes (F-CNTs);
ii) 1-20 wt.% an alkali metal-containing salt; and
iii) 1-20 wt.% an organic polymer or copolymer.

The electrode may also include an inorganic filler. The inorganic filler may be a passive inorganic filler, such as, but not limited to, $Al_2O_3$, $SiO_2$, $TiO_2$, $ZrO_2$, and $BaTiOs$. Alternatively, or additionally, the inorganic filler may be an active inorganic filler, referred to as an active stabilizer, such as (but not limited to) $Li_{1.3}Al_{0.3}Ti_{1.7}(PO_4)_3$ (LATP), $Li_3N$, $Li_7La_3Zr_2O_{12}$ (LLZO), $Li_{0.33}La_{0.557}TiO_3$ (LLTO), and $Li_{1.4}Al_{0.4}Ge_{1.6}(PO_4)_3$ (LAGP). Preferably the inorganic filler, where present, is an inorganic active stabilizer comprising $Li_7La_3Zr_2O_{12}$ (LLZO). Preferably the LLZO is as hereinbefore described in relation to the solid electrolyte.

It has surprisingly been found that in the electrode as hereinbefore described, there is no need for an electron conducting agent (e.g. an additional (adjuvant) conductive carbon source), which is often up to 10% of the mass of the electrode in conventional electrochemical cells. As a result, more active material is embedded in the same electrode volume leading to better gravimetric and volumetric capacity.

Without wishing to be bound by theory, it is thought that the structure of fluorinated carbon nanotubes (F-CNTs) allows for effective percolating paths and thus high electrical conductivity and therefore fulfils this purpose without requiring an additional electron conducting agent.

Preferably, therefore, the electrode does not further comprise a carbon-based conductive adjuvant. Thus certain preferred electrodes for use as a cathode in the electrochemical cell of the invention do not comprise, or consist essentially of, a carbon-based conductive adjuvant. In such cathodes, a carbon-based conductive adjuvant is preferably present in an amount of less than about 10 wt.%, preferably less than about 5 wt.%, more preferably less than about 2 wt.%, still more preferably less than about 1 wt.%, e.g. less than about 0.5 wt.% or less than about 0.1 wt.%.

The electrochemical cell as described herein may comprise a cathode (e.g. an electrode as hereinbefore described) in intimate contact with a solid composite electrolyte as hereinbefore described, and an anode in intimate contact with the electrolyte, where the anode comprises the alkali metal (typically lithium), or an alloy comprising the alkali metal.

The term "intimate contact'" as used herein means contact which permits transfer or permeation of ions (ionic conduction) or electrons (electronic transfer) through the contact interface.

Electrodes, and particularly cathodes, usually also contain some amount of the solid electrolyte, or components thereof. However, in some preferred embodiments of the present invention, the cathode may have between about 5 - 35 wt.% of the solid electrolyte solution relative to the total electrode incorporated therein. It has surprisingly been found that the incorporation of a specific mass percentage of the salt/polymer solution into the electrode (i.e. cathode) of the invention mitigates the need for the addition of conventionally used binders or improves performance further. Without wishing to be bound by theory, it is thought that this incorporation of the solid electrolyte solution into the electrode provides a continuous ionic path within the cathode mass.

Thus in preferred electrochemical cells of the invention, the organic polymer or copolymer of the cathode and the polymer of the solid electrolyte comprise the same material. The organic polymer or copolymer of the cathode and the polymer of the electrolyte preferably both comprise poly(ethylene oxide), and more preferably comprise polyethylene oxide) of the same $M_w$.

In addition, the alkali metal-containing salt of the cathode and the alkali metal-containing electrolyte salt of the electrolyte preferably comprise the same material, and more preferably the alkali metal-containing salt of the cathode and the alkali metal-containing electrolyte salt of the electrolyte both comprise $LiClO_4$, $LiBF_4$ or lithium bis(trifluoromethane-sulfonyl)imide (LiTFSI), more preferably LiTFSI.

In addition, the inorganic active filler of the solid electrolyte and the optional inorganic filler of the cathode preferably comprise the same material, and more preferably comprise $Li_7La_3Zr_2O_{12}$ (LLZO). Preferably the LLZO is as hereinbefore described in relation to the solid electrolyte.

The anode may comprise carbon electrode material such as lithiated carbon, a metal or metal alloy (preferably alkali metal or alloy) plate or foil. Typically the anode comprises or consists of lithium or a lithium-based alloy or lithium titanate. The anode may comprise an Li-Me alloy material, wherein Me is selected from one or more of Mg, Ca, Al, Si, Ge, Sn, Pb, As, Sb, Bi, Pt, In, Ag, Au, Ti, Zn or Cd; or may be a carbon-containing material, e.g. graphite. These elements may be used to modify chemical or physical properties of the anode, such as to provide a host for Li (e.g. C) or provide capacity from surface reactions (e.g Si, Sn, Pb etc.), increase structural strength (e.g. Al, Mg etc.) or to prevent degradation (e.g. Pt, Au, Ag etc.).

The electrochemical cell may have a generally planar (including a rolled-planar structure), multi-layered configuration. For example, the cathode may provide a proximal planar layer, the solid composite electrolyte may provide an intermediate planar layer juxtaposed the proximal planar layer, and the anode may provide a distal planar layer juxtaposed the intermediate planar layer. The solid composite electrolyte layer is thus, in this case, sandwiched between the proximal and distal electrode layers.

Whilst the thickness of the electrolyte layers is conventoinally minimised, in the present invention, the thickness of the solid electrolyte layer may be at least 5 microns, optionally at least 10 microns, more optionally at least 25 microns, even more optionally at least 50 microns, or at least 200 microns. In some embodiments, the thickness of the solid electrolyte layer may be up to 250 microns. The greater the value of the ionic conductivity at the preferred operating temperature, the thicker the electrolyte can be, offering benefits in decreasing self-discharge. In other words, the improved electrochemical properties that result from the combination of the electrode (e.g. cathode) as described herein with the solid composite electrolyte as described herein permits the use of a greater thickness of electrolyte layer than is standard in the art. This greater thickness would normally be undesirable due to the increased resistance and resulting poor performance of a relatively thick electrolyte layer, but the improved conductivity and transport number that result from the combination of the electrode and solid composite electrolyte composition in the electrochemical cell of the invention is such that a functioning cell with sufficient power and low self-discharge can be formed with this thicker layer.

Solid metal terminals may be provided in intimate contact with each of the anode and cathode. These are exposed (or spatially accessible) to permit integration into an electrical circuit.

The electrochemical cell is typically a primary cell (i.e. one which is not rechargeable, or which is intended for a single use).

An electrochemical cell as hereinbefore described may be configured (without limitation) as a bobbin cell, or a spiral wound cell, or as a coin/button cell, pouch cell, or as a flat plate cell.

A further aspect of the invention provides a system comprising an electrochemical cell as hereinbefore described coupled with a power control circuit,

> wherein the power control circuit is operable to discharge the electrochemical cell at a first voltage and at a second voltage;
> wherein the second voltage is lower than the first voltage; and
> output terminals electrically connected to the power control circuit for providing the output voltage to a load.

Preferably, the second voltage is at least 20%, preferably at least 50% of the first voltage.

Optionally the second voltage is less than the first voltage, that is less than 100% of the first voltage.

In some preferred embodiments of the system as hereinbefore described, the power control circuit is a DC-to-DC voltage convertor.

Optional and preferred features of the system in accordance with the further aspect of the invention are independently optional and preferred features of the electrochemical cell according to the second aspect of the invention, and these features are not repeated here for brevity.

It has surprisingly been found that the electrochemical cell as described herein can be used to provide lower voltage applications at elevated temperatures (e.g. greater than about 60 °C, greater than about 65°C, greater than about 95 °C, greater than about 120 °C, e.g. between 65 and 150 °C) in order to derive another 800+ Wh / Kg of the cathode mass. To take advantage of the additional charge provided by the lower voltage plateau, the electronic circuitry and equipment powered by cells and batteries described herein includes a DC to DC converter to accommodate the roughly 2:1 change in terminal voltage during discharge.

When 'plateau' is used to describe the shape of the voltage-capacity profile on discharge, it is used to describe a region wherein the voltage is generally constant with changing capacity. The profile may not be strictly flat and instead has a gradual slope, however it remains distinct from regions wherein the voltage is changing sharply with capacity.

When 'plateau' is used to describe the shape of the voltage-capacity profile on discharge, it is used to describe a region wherein the voltage is generally constant with changing capacity. The profile may not be strictly flat and instead may have a gradual slope, however it remains distinct from regions wherein the voltage is changing sharply with capacity. That is +/- 15% of the median voltage at >90% of a given capacity range. In other words the voltage is similar over the range, excepting any minor temporary variations, for example as a result of measurement error or measurement tolerance.

In accordance with a further aspect of the invention there is provided a battery comprising a plurality of electrochemical cells as hereinbefore defined arranged in parallel or in series.

In an additional aspect of the invention there is provided a method of manufacturing an electrochemical cell as hereinbefore described comprising providing a liquid precursor of the solid composite electrolyte as hereinbefore described and depositing said liquid precursor as one or more layers on a surface of the cell and causing or allowing the deposited layer(s) to solidify in situ to form the solid composite electrolyte. The layers may be deposited by printing, especially inkjet printing, or other known manufacturing methods. The rheological properties of the precursor is tuned with respect to the deposition method. The liquid precursor includes formulations of inks and soft solids such as pastes, where the amount of liquid to solid ratio is lowered. The liquid precursor may be a slurry or suspension of solid particles in a liquid carrier. The liquid carrier may comprise a polymer or monomer, which may be dissolved in a solvent. The polymer or monomer may be a solid or a liquid prior to being dissolved in a solvent. Solidification may be by evaporation of the solvent, or by polymerisation of the polymer (or its monomer).

The solid-state electrolyte obviates the need for a conventional separator layer or membrane between the anode and cathode to prevent shorting by offering a physical barrier, and because in absence of a liquid electrolyte, migration of liquid or gel electrolyte is not an issue with solid electrolytes. Thus, a distinct separator layer or membrane may be absent in the cells of the present invention.

In accordance with a further aspect of the invention there is provided the use of an electrochemical cell as hereinbefore defined for powering a tool in a subterranean well such as for oil and/or gas.

A further aspect of the invention is the use of an electrode, an electrochemical cell, or a battery as herein described at a temperature of greater than about 65 °C, preferably greater than about 100 °C, or greater than about 120 °C. Preferably, this use is for powering a tool in a subterranean well for oil, gas, or other hydrocarbons.

Optional and preferred features of the electrode in accordance with the first and second aspects of the invention are independently optional and preferred features of the cathode according to the further aspects of the invention, and these features are not repeated here for brevity.

It has surprisingly been found that the electrode, electrochemical cell and battery of the invention is particularly suitable for use under conditions (e.g. temperature and pressure) that are particularly challenging for existing technologies. In particular, the electrochemical cell and battery of the invention have been found to be stable against degradation and self-discharge at elevated temperatures and/or elevated pressures. This stability is maintained at temperatures of greater than about 65°C, greater than about 95 °C, greater than about 120 °C, e.g. between 65 and 150 °C. Indeed, embodiments of the present invnetion may function at even higher temperatures, such as 200 - 250 °C.

Without wishing to be bound by theory, it is thought that the solid composite electrolyte as described herein can operate more safely at higher temperatures due to the absence of a liquid solvent, which may be flammable or cause mechanical damage to an electrochemical cell through partial vapourisation or off-gassing. It is also thought that the solid composite electrolyte accommodates volume changes (e.g. expansion) in the electrode (e.g. cathode) throughout cycling of the electrochemical cell and throughout temperature variations in use. This also minimises the impact on the performance of the electrochemical cell (or battery) from any phase changes that may occur in any of the components of the electrochemical cell (or battery) as a result of variations in the operating conditions (e.g. temperature, pressure) during use.

A further aspect of the invention provides a system comprising an electrochemical cell as hereinbefore described coupled with a power control circuit,

wherein the power control circuit is operable to discharge the electrochemical cell at a first voltage and at a second voltage;

wherein the second voltage is lower than the first voltage; and

output terminals electrically connected to the power control circuit for providing the output voltage to a load.

Preferably, the second voltage is at least 20%, preferably at least 50%, optionally less than 100% of the first voltage.

In some preferred embodiments of the system as hereinbefore described, the power control circuit is a DC-to-DC voltage convertor.

Optional and preferred features of the system in accordance with the further aspect of the invention are independently optional and preferred features of the electrochemical cell according to one or more earlier aspects of the invention, and these features are not repeated here for brevity.

It has surprisingly been found that the electrochemical cell as described herein can be used to provide lower voltage applications at elevated temperatures (e.g. greater than about 60 °C, greater than about 65°C, greater than about 95 °C, greater than about 120 °C, e.g. between 65 and 150 °C) in order to derive another 800+ Wh / Kg of the cathode mass. To take advantage of the additional charge provided by the lower voltage plateau, the electronic circuitry and equipment powered by cells and batteries described herein includes a DC to DC converter to accommodate the roughly 2:1 change in terminal voltage during discharge.

Embodiments of the present invention will now be described with references to the accompanying drawings in which:

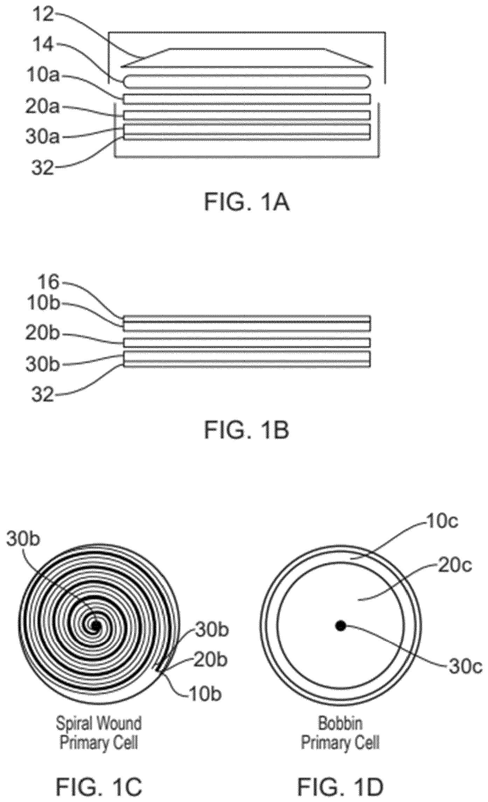

Figure 1A is a schematic exploded view of a coin cell with solid state electrolyte. The anode 10a and cathode 30a are placed either side of the electrolyte 20a with a spacer 14 and spring 12 used to ensure even pressure is applied across the surface of the cell. A current collector 32 is provided below the cathode.

Figure 1B is a schematic exploded view of the layers of a spiral wound cell before they are shaped into a spiral, showing the anode 10b, electrolyte 20b, and cathode 30b with current collector 32. An insulator 16 is provided above the anode 10b.

Figure 1C is a schematic diagram of the Fig, 1B layers shaped as a spiral in a spiral wound cell.

Figure 1D is a schematic diagram of a bobbin cell. A central cathode 30c is separated from the anode 10c formed as an outer ring, by the intervening electrolyte 20c.

Figure 2 shows an Arrhenius plot of derived conductivities for EO:Li electrolytes made with 5,000,000 MW PEO with and without addition of LLZO active inorganic filler.

Figure 3 shows a plot of the discharge at room temperature (solid) and elevated temperature (dotted) for each, discharged at a rate of 1 mA $g^{-1}$.

Figure 4 shows a plot of the discharge at 60 °C (lower curve), 80 °C (middle curve) and 120 °C (upper curve) for cells with "polymer in salt" electrolyte and F-CNT cathode, discharged at a rate of 15 mA $g^{-1}$.

Figure 5 shows the Figure 4 curves with the 120 °C plot fully discharged.

## EXAMPLES

The following is a description by way of example only and with reference to the figures of the drawings of modes for putting the present invention into effect.

## Materials

All materials used are commercially available from known suppliers. Graphite Monofluoride (CFx) and fluorinated carbon nanotubes (F-CNTs) were purchased from ACS Materials. Polyethylene oxide (PEO) with various molecular weights (300,000 - approximately 5,000,000 g $mol^{-1}$) and lithium salts (e.g. Lithium bis(trifluoromethanesulfonyl)imide (LiTFSI)) was purchased from Sigma Aldrich. Lithium lanthanum zirconium oxide (LLZO) was purchased from MSE Supplies.

## Example 1 - CFx:PEO : LiTFSI "polymer in salt" cell

To synthesize the "polymer in salt" electrolytes, an appropriate amount of high-molecular weight PEO (e.g. 5,000,000 MW PEO) was measured so that it would achieve the desired EO:Li$^+$ ratio with the lithium salt. The PEO and lithium salt were mixed with anhydrous acetonitrile (Sigma Aldrich) and stirred vigorously until no traces of solid PEO could be seen. In some of the cells, LLZO active filler was added so that the mass ratio of LLZO to PEO was 1:9. For comparison, "salt in polymer" electrolyte was prepared with 8:1 EO:Li ratio. The specific weight percentages of LiTFSI (Sigma Aldrich), LLZO and PEO used in this experiment are listed in Table 1. For 1:1 electrolytes the compositions were termed "polymer in salt", because the mass of LiTFSI salt was greater than 50% of the total mass of the electrolyte.

*Table 1: Weight percent of salt and base polymer used in "polymer in salt" and "salt in polymer" electrolytes.*

|  | 8:1 EO:Li electrolyte with LLZO | 1:1 EO:Li electrolyte without LLZO | 1:1 EO:Li electrolyte with LLZO |
|---|---|---|---|
| PEO | 51.7% | 13.3% | 13.2% |
| LiTFSI | 42.6% | 86.7% | 85.2% |
| LLZO | 5.7% | 0% | 1.6% |

To fabricate the cathode a mix of active material (e.g. $CF_x$) and conductive adjuvant (e.g. carbon black) was mixed in 4:1 mass ratio, ball milled, stirred with PEO/LiTFSI/acetonitrile electrolyte solution and homogenized in ultrasound bath. By mass, the cathode composition was 70.91% $CF_x$, 17.73% Carbon Black, 1.52% PEO, 9.82% LiTFSI, and 0.02% LLZO.

To make a full cell, a 2032 cell cap was filled with about 0.5 g of the cathode mix and allowed to dry in an argon filled glove box at 60 °C. The operation was repeated until the desired amount of active cathode material was accumulated. The cathode was topped with electrolyte and dried again at 60 °C, with the process being repeated until the cathode was fully covered. The weights of the cathode and the electrolyte were taken after each operation was completed. Lithium foil (16 mm diameter, 1.5 mm thick) was placed on top of the dried electrolyte. Then a stainless steel spacer and a wave spring were placed on top of the lithium foil, and the cell bottom was crimped using 50 kg/cm$^2$ of pressure. The cells were allowed to rest overnight before electrochemical testing was undertaken.

Impedance spectroscopy was conducted on a symmetric cell. A lithium foil was placed at the bottom of a 2032 button cell cap electrolyte was casted on top. The electrolyte was allowed to dry in a low-pressure environment. Once a suitable layer of polymer electrolyte had formed on the lithium foil, a second lithium foil was placed on top, along with a spacer, wave spring, and lid. The cell closed for a few minutes under 50 kg cm$^{-2}$ of pressure and then tested using a Bio-Logic VSP. The impedance spectra was measured from 10 Hz to 1 MHz frequency using 0.01 V applied disturbance voltage. A scan was taken at each of the following temperatures: 30 °C, 50 °C, 60 °C, 70 °C, 80 °C, 90 °C, 100 °C, 110 °C, 120 °C. This measured polarization resistances were used to determine the overall conductivity of the electrolytes. Equation E1 shows this calculation:

$$\sigma = \frac{L}{R_P A} \qquad [\text{S cm}^{-1}] \qquad Eq.\ E1$$

Where $R_p$ is the polarization resistance, A is the cross-sectional area of the material and L is the thickness of the material.

Direct current (DC) polarization voltammetry was used to measure the ionic transference number of an electrochemical material. This method is supplemental to the impedance spectroscopy and illustrates the dominant mode of transport within the electrolyte. The method of Doyle and collaborators was used for transport number calculation [M. Doyle, T. F. Fuller, and J. Newman, "The importance of the lithium ion transference number in lithium/polymer cells," Electrochim. Acta, vol. 39, no. 13, pp. 2073-2081, Sep. 1994, doi: 10.1016/0013-4686(94)85091-7]. First, an impedance spectrum is taken on a symmetrical cell and the initial film resistance is noted ($R_0$). Next, a DC polarization voltage of a few millivolts is applied to the same cell and the initial current and final steady state current is measured. The initial current ($I_0$) is the current at the first application of the voltage pulse and the steady state current ($I_s$) is the current after the symmetric cell has achieved steady state. The cell undergoes one last impedance spectroscopy measurement to determine the steady state resistance ($R_s$). The transport number is then calculated using Equation E2.

$$t_{Li^+} = \frac{I_s(\Delta V - I_0 R_0)}{I_0(\Delta V - I_s R_s)} \qquad Eq.\ E2$$

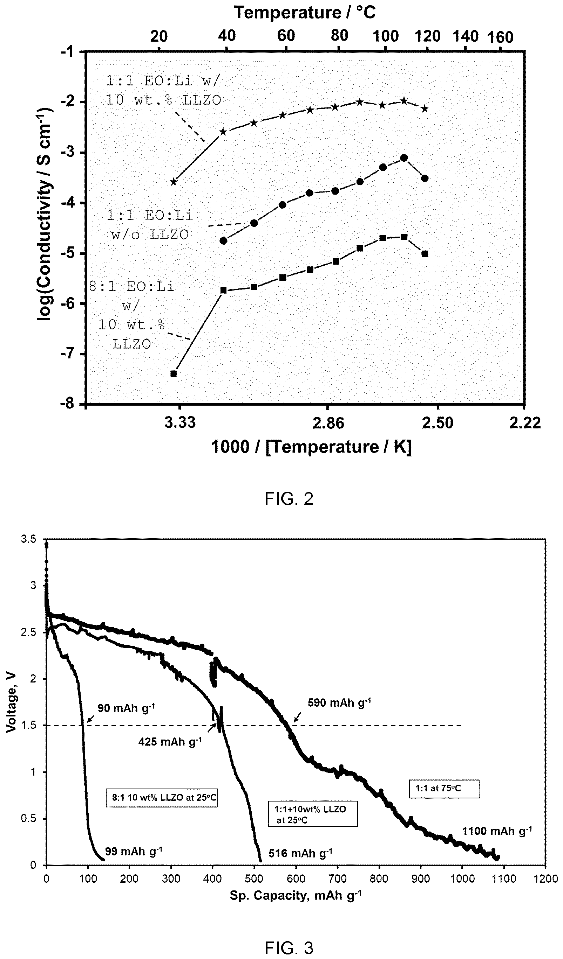

The results are shown in Figure 2. It can be seen from Figure 2 that the "polymer in salt" (1:1) electrolytes exhibit conductivity of at least an order of magnitude higher than that of the "salt in polymer" (8:1) electrolyte. The activation energy and pre-exponential factor calculated from the fit to the Arrhenius are summarized in Table 2. The "polymer in salt" (1:1) electrolytes show lower activation energy and higher pre-exponential factor than that of the "salt in polymer" (8:1) EO:Li electrolyte. "Polymer in salt" electrolyte containing LLZO filler exhibits lower activation energy than the 1:1 EO:LiTFSI electrolyte without LLZO, though it has a slightly lower pre-exponential factor. Importantly, the 1:1 LiTFSI-LLZO electrolyte shows conductivity approaching 10$^{-3}$ S cm-1 at room temperature and monotonic temperature dependent behaviour.

*Table 2: Results of the Arrhenius analysis for the concentration variation.*

| Electrolyte | 1:1 EO:Li with 0% LLZO | 1:1 EO:Li with 10% LLZO | 8:1 EO:Li with 10% LLZO |
|---|---|---|---|
| Ea (kJ mol$^{-1}$) | 42.2 | 31.46 | 49.439 |
| A (S cm$^{-1}$) | 301 | 294.68 | 120.109 |
| Room temperature Transport number for Li$^+$ | $0.978 \pm 0.082$ | $0.991 \pm 0.126$ | $0.803 \pm 0.082$ |

The transport numbers of the electrolytes in Table 2 exceed the numbers published for "salt in polymer" PEO electrolytes, which are expected be 0.5 or lower. However, the 1:1 electrolytes are both highly amorphous and highly concentrated, facilitating good ionic transport.

Constant current discharge curves are shown in Figure 3. The cells with 1:1 electrolytes have almost 10 times the capacity of the cells with 8:1 electrolytes. Table 3 details the room temperature and 75 °C discharge of full cells at 1 mA g$^{-1}$ current rate with a CFx cathode for 1:1 EO:Li 0% mass LLZO, the 1:1 EO:Li 10% mass LLZO, and 8:1 EO:Li 10% mass LLZO electrolytes. The higher Li salt concentration of the 1:1 electrolytes show a vast improvement in capacity over the 8:1 electrolytes at room temperature. The 'polymer-in-salt' chemistry allows reaching the high capacity of the cell at 75oC.

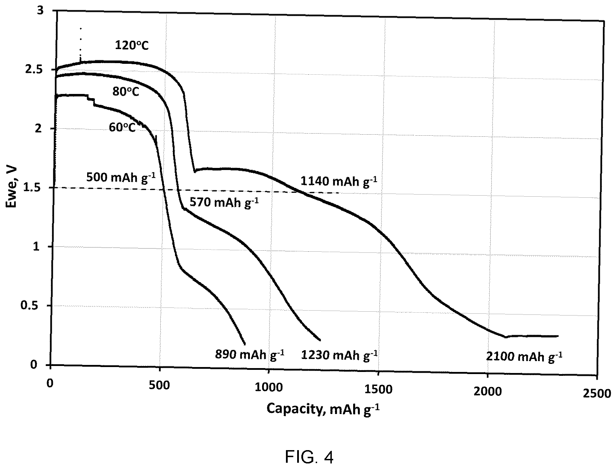

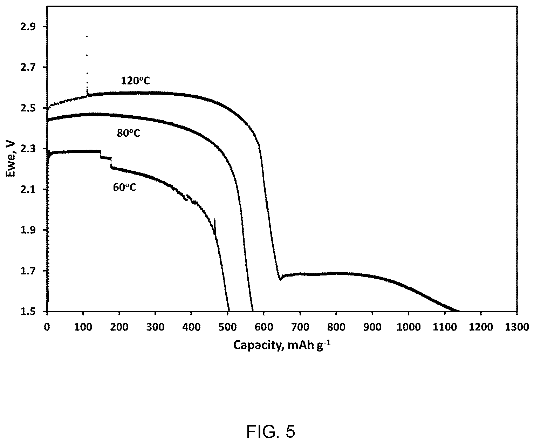

*Table 3: Capacity and gravimetric specific capacity of the cells shown in figure 4-10, discharged at a rate of 1 mA g$^{\sim 1}$*

| Battery | Capacity (mAh) | Specific Capacity (mAh g$^{-1}$) | Mass of Cathode(g) | Active material mass(g) |
|---|---|---|---|---|
| *Room Temperature Discharge* | | | | |
| 1:1 Electrolyte +0% LLZO | 24.96 | 519.9 | $0.06 \pm 0.01$ | 0.048 |
| 1:1 electrolyte +10% LLZO | 55.25 | 1151 | $0.06 \pm 0.01$ | 0.048 |
| 8:1 Electrolyte +10% LLZO | 0.7948 | 99.35 | $0.04 \pm 0.01$ | 0.036 |
| *75 °C Discharge* | | | | |
| 1:1 Electrolyte +0% LLZO | 21.25 | 531.3 | $0.05 \pm 0.01$ | 0.40 |
| 1:1 electrolyte +10% LLZO | 23.09 | 962.2 | $0.03 \pm 0.01$ | 0.024 |
| 8:1 Electrolyte +10% LLZO | 0.6408 | 26.70 | $0.03 \pm 0.01$ | 0.024 |

| Cathode composition | Specific Capacity (mAh g$^{-1}$) | Mass of Cathode (g) | Active material mass (g) |
|---|---|---|---|
| **Room Temperature Discharge** | | | |
| **1:1 electrolyte +10% LLZO** | 520 | $0.06 \pm 0.01$ | 0.048 |
| **8:1 Electrolyte +10% LLZO** | 99 | $0.04 \pm 0.01$ | 0.036 |
| **75 °C Discharge** | | | |
| **1:1 Electrolyte +0% LLZO** | 1100 | $0.05 \pm 0.01$ | 0.40 |

**Example 2** - **F-CNT: PEO : LiTFSI "polymer in salt" cell**

The cathode was fabricated using 0.07 g F-CNT, 0.02 g PEO ($M_w \approx 300,000$ g mol$^{-1}$) and 0.01 g LiTFSI per 1 g N-methyl-2-pyrrolidone (NMP). The F-CNT, PEO and LiTFSI are added to an airtight vial containing the NMP. This is then sonicated using ultrasonic sound waves for 30 min in a water bath at 65 °C. Whilst still warm, this cathode mixture is doctor bladed onto carbon-coated aluminium (1 $\mu$m carbon on 16 $\mu$m aluminium), with a thickness setting of 250 $\mu$m. This is then dried in a vacuum oven at 50-60 °C overnight.

To synthesize the "polymer in salt" electrolytes, equal weights of high-molecular weight PEO (e.g. 900,000 g mol$^{-1}$) and LiTFSI were measured and mixed with anhydrous acetonitrile (Sigma Aldrich) and stirred vigorously until no traces of solid PEO could be detected.

To make a full cell, 19 mm diameter cathode disk was placed in a 2032 cell cap. The electrode was coated with electrolyte by drop casting and dried at 60 oC in protective atmosphere. Lithium foil (16 mm diameter, 1.5 mm thick) was placed on top of the dried electrolyte. Then a stainless steel spacer and a wave spring were placed on top of the lithium foil, and the cell bottom was crimped using 50 kg/cm$^2$ of pressure. The cells were allowed to rest overnight before electrochemical testing was undertaken. Constant current discharge curves of these cells are shown in Figure 4. The cells were discharged at constant current rate of 15 mA g$^{-1}$ at 60 °C, 80 °C and 120 °C.

The specific capacities at cut-off voltages of 1.5 V and 0.25 V are marked on the graph. The first and the second plateaus discharge voltages are monotonically flat and their plateau potential is dependent on the discharge temperature. The capacities reached at lower potentials form slope curves with specific capacities at 0.25 V cut-off potential substantially exceed the theoretical capacity of F-CNT (CFx) material.

Especially in view of their longevity and performance at elevated temperatures, embodiments of the present invention can be used in a variety of wells including oil and gas wells in general, steam/water injection wells, gas injection wells, geothermal thermal wells, carbon capture and storage (CCS) wells, hydrogen storage wells. In particular, the may be used in geothermal wells or production wells for oil or gas production. As such certain embodiments may perform for, for example, 8 years. Indeed, certain embodiments may perform in a well for much longer, such as for 15 to 20 years.

**Claims**

1. An electrochemical cell comprising:

    a. a cathode;
    b. an anode; and
    c. a solid electrolyte;
    wherein the cathode is an electrode comprising a fluorinated carbon material, and
    wherein the solid electrolyte comprises an electrolyte component and optionally a filler, the electrolyte component comprising:

        i. 50 to 95 wt.% of an alkali metal-containing electrolyte salt, and
        ii. 5 to 50 wt.% of a polymer.

2. The electrochemical cell of claim 1, wherein the fluorinated carbon material is a fluorinated carbon nanotube (F-CNT).

3. The electrochemical cell of claim 1 or claim 2, wherein 0.1 to 25wt% of the solid electrolyte comprises a filler in the form of an inorganic active stabilizer comprising an alkali metal compound.

4. The electrochemical cell of claim 3, wherein the inorganic active stabilizer comprises one or more of $Li_{1.3}Al_{0.3}Ti_{1.7}$ $(PO_4)_3$ (LATP), $Li_3N$, $Li_7La_3Zr_2O_{12}$ (LLZO), $Li_{0.33}La_{0.557}TiO_3$ (LLTO), LLZTO, LLAZO, and $Li_{1.4}Al_{0.4}Ge_{1.6}(PO_4)_3$ (LAGP), an alkali metal garnet, $LiAlO_2$, $Li_{10}GeP_2S_{12}$ (LGPS), lithium ion-conducting glass-ceramic (LICGC), $Li_2PO_2N$ (LiPON), $Li_{0.5}La_{0.5}TiO_3$, $Li_{1.4}Al_{0.4}Ti_{1.6}(PO_4)_3$, $Li_{1.5}Al_{0.5}Ge_{1.5}(PO_4)_3$ and $Na_3Zr_2Si_2PO_{12}$.

5. The electrochemical cell of claim 4, wherein the inorganic active stabilizer comprises $Li_7La_3Zr_2O_{12}$ (LLZO).

6. The electrochemical cell of any of claims 1 to 5, wherein the alkali metal-containing electrolyte salt comprises one or more of: $LiClO_4$, $LiBF_4$, $LiPF_6$, $LiAsF_6$, $NaCF_3SO_3$, $LiCF_3SO_3$, $LiN(CF_3SO_2)_2$, LiDFOB, LiBOB, lithium bis(trifluoromethanesulfonyl)imide (LiTFSI), or lithium bis(fluorosulfonyl)imide (LiFSI).

7. The electrochemical cell of any of claims 1 to 6, wherein the polymer comprises polyethylene oxide) or poly(vinylidene fluoride).

8. The electrochemical cell of any of claims 1 to 7, wherein the polymer has an average molecular weight ($M_w$) in the range of between about 100,000 and 10,000,000.

9. The electrochemical cell of any preceding claim, wherein the weight percentage of the salt in the solid electrolyte is at least 50.

10. The electrochemical cell of any of claims 1 to 9, wherein the cathode comprises

        i) 50-98 wt.% a fluorinated carbon material;
        ii) 1-35 wt.% an alkali metal-containing salt; and
        iii) 1-35 wt.% an organic polymer or copolymer;

11. The electrochemical cell of claim 10, wherein the fluorinated carbon material is a fluorinated carbon nanotube (F-CNT).

12. The electrochemical cell of claim 10 or claim 11, wherein the electrode further comprises:
iv) 0.1-15 wt.% of a carbon-based conductive adjuvant.

13. The electrochemical cell of claim 10 or claim 11, wherein the electrode does not further comprise a carbon-based conductive adjuvant.

14. The electrochemical cell of any of claims 10 to 13, wherein the organic polymer or copolymer of the cathode and the polymer of the solid electrolyte comprise the same material, preferably wherein the organic polymer or copolymer of the cathode and the polymer of the electrolyte both comprise poly(ethylene oxide).

15. The electrochemical cell of any of claims 10 to 14, wherein the alkali metal-containing salt of the cathode and the alkali metal-containing electrolyte salt of the electrolyte comprise the same material, preferably wherein the alkali metal-containing salt of the cathode and the alkali metal-containing electrolyte salt of the electrolyte both comprise lithium bis(trifluoromethanesulfonyl)imide (LiTFSI).

16. The electrochemical cell of any preceding claim, wherein the cathode further comprises an inorganic active stabilizer comprising an alkali metal compound, preferably wherein the inorganic active stabilizer comprises $Li_7La_3Zr_2O_{12}$ (LLZO).

17. The electrochemical cell of any preceding claim, wherein the solid electrolyte is formed as a layer having a thickness of at least 5 microns, optionally at least 25 microns, more optionally at least 50 microns.

18. The electrochemical cell of any preceding claim, wherein the anode comprises lithium or an alloy thereof.

19. The electrochemical cell of any preceding claim, shaped into a bobbin shape or a spiral wound shape.

20. A container containing the electrochemical cell of any preceding claim, the container defining a space adjacent the cell to allow for thermal expansion thereof.

21. A system comprising the container of claim 20 or an electrochemical cell according to any of claims 1 to 19 coupled with a power control circuit,

wherein the power control circuit is operable to discharge the electrochemical cell at a first voltage and at a second voltage;
wherein the second voltage is lower than the first voltage; and
output terminals electrically connected to the power control circuit for providing the output voltage to a load.

22. The system according to claim 21, wherein the second voltage is at least 20%, preferably at least 50% of the first voltage.

23. The system according to claim 21 or claim 22, wherein the power control circuit is a DC-to-DC voltage convertor.

24. Use of an electrochemical cell as claimed in any of claims 1 to 19, the container of claim 20, or the system as claimed in claims 21 to 23, at a temperature of greater than about 65 °C, preferably greater than about 100 °C.

25. The use of an electrochemical cell or system as claimed in claim 24 for powering a tool in a subterranean well, preferably in a subterranean well for oil and/or gas.

FIG. 1A

FIG. 1B

Spiral Wound
Primary Cell

FIG. 1C

Bobbin
Primary Cell

FIG. 1D

FIG. 2

FIG. 3

FIG. 4

FIG. 5

Europäisches
Patentamt

European
Patent Office

Office européen
des brevets

# EUROPEAN SEARCH REPORT

**Application Number**

EP 24 22 2654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | CN 109 786 842 A (CN ELECT TECH NO 18 RES INST) 21 May 2019 (2019-05-21)<br>* paragraphs [0004], [0010], [0015] – [0023], [0027] – [0029], [0072] *<br>* examples 4-6 *<br>* claim 2 *<br>* figure 2 *<br>----- | 1,3-20, 24,25<br>21-23 | INV.<br>H01M10/052<br>H01M10/056<br>H01M10/0565<br>H01M6/18<br>H01M4/38<br>H01M4/40<br>H01M4/583 |
| X | CN 111 987 356 A (SHANGHAI INST SPACE POWER SOURCES)<br>24 November 2020 (2020-11-24)<br>* paragraphs [0006] – [0033], [0044], [0052] *<br>----- | 1-3,<br>7-11,<br>13-15 | H01M4/62<br>H01M10/44<br>H01M50/202<br>H01M4/133<br>H01M10/04<br>H01M10/0587 |
| A | HA SEONGMIN ET AL: "Fluorination methods and the properties of fluorinated carbon materials for use as lithium primary battery cathode materials",<br>JOURNAL OF INDUSTRIAL AND ENGINEERING CHEMISTRY, THE KOREAN SOCIETY OF INDUSTRIAL AND ENGINEERING CHEMISTRY, KOREA,<br>vol. 111, 1 April 2022 (2022-04-01), pages 1-17, XP087100602,<br>ISSN: 1226-086X, DOI: 10.1016/J.JIEC.2022.03.044<br>[retrieved on 2022-04-01]<br>* abstract *<br>* sections "Carbon nanotubes (CNTs)", "Conclusion and outlook" *<br>* tables 1-5 *<br>* figure 5 *<br>-----<br>-/-- | 1-18,24, 25 | H02J7/00<br>E21B41/00 |

**TECHNICAL FIELDS SEARCHED (IPC)**

H01M
E21B
H02J

The present search report has been drawn up for all claims

| Place of search | Date of completion of the search | Examiner |
|---|---|---|
| The Hague | 20 October 2025 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 4

Europäisches
Patentamt

European
Patent Office

Office européen
des brevets

# EUROPEAN SEARCH REPORT

**Application Number**

EP 24 22 2654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG XUEYING ET AL: "The Critical Role of Fillers in Composite Polymer Electrolytes for Lithium Battery", NANO-MICRO LETTERS, vol. 15, no. 1, 28 March 2023 (2023-03-28), XP093288740, ISSN: 2311-6706, DOI: 10.1007/s40820-023-01051-3 Retrieved from the Internet: URL:https://link.springer.com/article/10.1007/s40820-023-01051-3/fulltext.html> * abstract * * section "2.2.2 Active fillers" * * tables 1, 3 * | 1-18,24, 25 | |
| A | LU XIAO ET AL: "Polymer-Based Solid-State Electrolytes for High-Energy-Density Lithium-Ion Batteries - Review", ADVANCED ENERGY MATERIALS, vol. 13, no. 38, 29 August 2023 (2023-08-29), XP093288887, Weinheim ISSN: 1614-6832, DOI: 10.1002/aenm.202301746 * abstract * * page 16, column 2, line 11 - page 17, column 1, line 3 * | 1-18,24, 25 | |

-----

-/--

| | | |
|---|---|---|
| | | TECHNICAL FIELDS SEARCHED (IPC) |

The present search report has been drawn up for all claims

| Place of search | Date of completion of the search | Examiner |
|---|---|---|
| The Hague | 20 October 2025 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

**EP 4 765 279 A1**

| | | Europäisches Patentamt<br>European Patent Office<br>Office européen des brevets | **EUROPEAN SEARCH REPORT** | **Application Number**<br>EP 24 22 2654 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Vincent Colin A: "4- Primary lithium cells"<br>In: "Modern Batteries",<br>1997, Butterworth & Heinemann, Oxford, Amsterdam, etcetera, XP093325132,<br>ISBN: 978-0-340-66278-6<br>pages 105-130, DOI:<br>10.1016/B978-034066278-6/50005-X,<br>* page 13, lines 8-11 *<br>* page 15, line 1 - page 16, line 28 *<br>* page 26, lines 1-8 *<br>* figures 4.9, 4.12 *<br>----- | 19 | |
| A | "IEC 62133-2 ED2: Secondary cells and batteries containing alkaline or other non-acid electrolytes - Safety requirements for portable sealed secondary lithium cells, and for batteries made from them, for use in portable applications - Part 2: Lithium systems",<br>21A/866/CD, IEC, 3, RUE DE VAREMBÉ, PO BOX 131, CH-1211 GENEVA 20, SWITZERLAND<br>,<br>20 October 2023 (2023-10-20), pages 1-68, XP082056831,<br>Retrieved from the Internet:<br>URL:https://api.iec.ch/harmonized/document s/download/3419692<br>[retrieved on 2023-10-20]<br>* page 56, lines 1888, 1893-1895 *<br>----- | 20 | |
| Y | WO 2011/015900 A1 (NXP BV [NL]; NOVOSELOV PAVEL [NL]) 10 February 2011 (2011-02-10)<br>* page 6, line 30 - page 7, line 31 *<br>* claim 1 *<br>* figure 2 *<br>-----<br>-/-- | 21-23 | |

TECHNICAL FIELDS SEARCHED (IPC)

The present search report has been drawn up for all claims

| Place of search | Date of completion of the search | Examiner |
|---|---|---|
| The Hague | 20 October 2025 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

page 3 of 4

20

Europäisches
Patentamt

European
Patent Office

Office européen
des brevets

**EUROPEAN SEARCH REPORT**

Application Number

EP 24 22 2654

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FOROUZESH MOJTABA ET AL: "Step-Up DC-DC Converters: A Comprehensive Review of Voltage-Boosting Techniques, Topologies, and Applications", IEEE TRANSACTIONS ON POWER ELECTRONICS, INSTITUTE OF ELECTRICAL AND ELECTRONICS ENGINEERS, USA, vol. 32, no. 12, December 2017 (2017-12), pages 9143-9178, XP011658038, ISSN: 0885-8993, DOI: 10.1109/TPEL.2017.2652318 [retrieved on 2017-08-03] * abstract * * figure 33 * | 21-23 | |
| A | US 2016/087271 A1 (JARVIS CHRISTINE [GB] ET AL) 24 March 2016 (2016-03-24) * paragraphs [0001] - [0006], [0008] - [0010], [0012], [0091], [0092] * * figure 1 * | 24,25 | |
| A | SUI YU ET AL: "An Autonomous Environmental Logging Microsystem (ELM) for Harsh Environments", IEEE SENSORS JOURNAL, IEEE, vol. 21, no. 18, 6 July 2021 (2021-07-06), pages 20796-20806, XP011877807, ISSN: 1530-437X, DOI: 10.1109/JSEN.2021.3095143 [retrieved on 2021-09-15] * abstract * * page 20796, column 1, line 1 - page 20797, column 1, line 4 * * page 20797, column 2, lines 1-32 * * section "II. System Design and Assembly C. Power Management" * * figure 1 * | 24,25 | TECHNICAL FIELDS SEARCHED (IPC) |

The present search report has been drawn up for all claims

| Place of search | Date of completion of the search | Examiner |
|---|---|---|
| The Hague | 20 October 2025 | Riba Vilanova, Marta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................

& : member of the same patent family, corresponding document

EPO FORM 1503 03.82 (P04C01)

page 4 of 4

Europäisches
Patentamt
European
Patent Office
Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 24 22 2654

The Search Division considers that the present European patent application does not comply with the requirements of unity of invention and relates to several inventions or groups of inventions, namely:

1. claims: 2-18(completely); 1, 24, 25(partially)

An electrochemical cell comprising: a) a cathode, b) an anode and c) a solid electrolyte; wherein the cathode comprises a fluorinated carbon material, and wherein the solid electrolyte comprises an electrolyte component and optionally a filler, the electrolyte component comprising : i) 50 to 95 wt.% of an alkali metal-containing electrolyte salt, and ii) 5 to 50 wt.% of a polymer. Use of said electrochemical cell at a temperature greater than 65 degrees C. Use of said electrochemical cell for powering a tool in a subterranean well.

---

2. claims: 19, 20(completely); 1, 24, 25(partially)

A container containing an electrochemical cell, the container defining a space adjacent the cell to allow for thermal expansion thereof. An electrochemical cell wherein the electrode-electrolyte assembly has a spirally wound shape or a bobbin shape. Said electrochemical cells comprises: a) a cathode, b) an anode and c) a solid electrolyte; wherein the cathode comprises a fluorinated carbon material, and wherein the solid electrolyte comprises an electrolyte component and optionally a filler, the electrolyte component comprising : i) 50 to 95 wt.% of an alkali metal-containing electrolyte salt, and ii) 5 to 50 wt.% of a polymer. Use of said container at a temperature greater than 65 degrees C. Use of said container for powering a tool in a subterranean well.

---

3. claims: 21-23(completely); 1, 24, 25(partially)

A system comprising an electrochemical cell, optionally contained in a container, and a power control circuit coupled with said electrochemical cell, wherein the power control circuit is operable to discharge the electrochemical cell at two different voltages; the system further comprising output terminals electrically connected to the power control circuit for providing output voltage to a load. Use of said system at a temperature greater than 65 degrees C. Use of said system for powering a tool in a subterranean well.

---

## ANNEX TO THE EUROPEAN SEARCH REPORT
## ON EUROPEAN PATENT APPLICATION NO.

EP 24 22 2654

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2025

| Patent document cited in search report | | Publication date | Patent family member(s) | | Publication date |
|---|---|---|---|---|---|
| CN 109786842 | A | 21-05-2019 | NONE | | |
| CN 111987356 | A | 24-11-2020 | NONE | | |
| WO 2011015900 | A1 | 10-02-2011 | CN | 102484292 A | 30-05-2012 |
| | | | EP | 2462651 A1 | 13-06-2012 |
| | | | WO | 2011015900 A1 | 10-02-2011 |
| US 2016087271 | A1 | 24-03-2016 | US | 2016087271 A1 | 24-03-2016 |
| | | | WO | 2016048567 A1 | 31-03-2016 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111009686

**Non-patent literature cited in the description**

- **CHOI et al.** *J. Power Sources*, 15 January 2015, vol. 274, 458-463
- **ANGELL**. *NATURE*, 1993, vol. 362, 137-139
- **M. DOYLE ; T. F. FULLER ; J. NEWMAN**. The importance of the lithium ion transference number in lithium/polymer cells. *Electrochim. Acta*, September 1994, vol. 39 (13), 2073-2081